# EUROPÄISCHE PATENTSCHRIFT

(11) **EP 4 397 873 B1**
(45) Veröffentlichungstag und Bekanntmachung des Hinweises auf die Patenterteilung: **30.09.2026**
(21) Anmeldenummer: 23220489.1
(22) Anmeldetag: 28.12.2023
(51) Int. Cl.: F16C 29/04, A47B 88/493, F16C 33/38, F16C 33/42, F16C 33/64, F16C 33/54

(54) **WÄLZKÖRPERKÄFIG, LINEARES FÜHRUNGSSYSTEM UND VERFAHREN ZUM HERSTELLEN EINES WÄLZKÖRPERKÄFIGS**
ROLLING BODY CAGE, LINEAR GUIDE SYSTEM AND METHOD FOR PRODUCING A ROLLING BODY CAGE
CAGE À CORPS ROULANTS, SYSTÈME DE GUIDAGE LINÉAIRE ET PROCÉDÉ DE FABRICATION D'UNE CAGE À CORPS ROULANTS

(30) Priorität: 06.01.2023 DE 102023100253
(43) Veröffentlichungstag der Anmeldung: 10.07.2024
(73) Patentinhaber: Accuride International GmbH, 65582 Diez/Lahn (DE)
(72) Erfinder: Bodenheimer, Kai, 56370 Bremberg (DE); Bonn, Christoph, 56348 Bornich (DE); Heffel, Andreas, 56269 Dierdorf (DE); Reuter, Christina, 65558 Burgschwalbach (DE); Schachner, Desiree, 65529 Waldems (DE)
(74) Vertreter: WSL Patentanwälte Partnerschaft mbB

(56) Entgegenhaltungen:
- EP-A1- 2 481 990
- DE-A1- 19 949 239
- DE-A1- 19 955 039
- JP-A- 2006 200 634

## Beschreibung

Die vorliegende Erfindung betrifft einen Wälzkörperkäfig für ein lineares Führungssystem wobei der Wälzkörperkäfig zwei Aufnahmeabschnitte und einen die zwei Aufnahmeabschnitte verbindenden Verbindungsabschnitt aufweist, wobei jeder der zwei Aufnahmeabschnitte zwei ausgedehnte Deckflächen aufweist, wobei die zwei Aufnahmeabschnitte jeweils eine Mehrzahl von Durchbrechungen aufweisen, wobei jede Durchbrechung eine die zwei Deckflächen verbindende Seitenfläche aufweist, wobei jeweils mindestens einer aus einer Mehrzahl von Lagerwälzkörpern in einer aus der Mehrzahl von Durchbrechungen des Wälzkörperkäfigs aufnehmbar ist, wobei die Seitenfläche der Durchbrechung oder ein Übergang zwischen einer der zwei Deckflächen und der Seitenfläche in Kontakt mit einer Wälzkörperoberfläche des in der Durchbrechung aufnehmbaren Lagerwälzkörpers bringbar ist.

Ferner betrifft die vorliegende Erfindung auch ein lineares Führungssystem mit einem solchen Wälzkörperkäfig.

Zudem betrifft die vorliegende Erfindung ein Verfahren zum Herstellen eines Wälzkörperkäfigs für ein lineares Führungssystem mit den Schritten: Bereitstellen eines Materialabschnitts, wobei der Materialabschnitt zwei Aufnahmeabschnitte und einen die zwei Aufnahmeabschnitte verbindenden Verbindungsabschnitt des Wälzkörperkäfigs definiert, wobei jeder der zwei Aufnahmeabschnitte zwei ausgedehnte Deckflächen aufweist, wobei die zwei Aufnahmeabschnitte jeweils eine Mehrzahl von Durchbrechungen aufweisen, wobei jede Durchbrechung eine die zwei Deckflächen verbindende Seitenfläche aufweist und wobei zwischen jeder der zwei Deckflächen und der Seitenfläche jeweils ein Übergang ausgebildet ist.

Lineare Führungssysteme, insbesondere Teleskopschienen, mit mindestens zwei Schienenelementen und einem Wälzkörperkäfig mit darin aufgenommenen Lagerwälzkörpern zur Reduzierung der Reibung zwischen jeweils zwei Schienenelementen sind in mannigfaltigen Ausführungsformen aus dem Stand der Technik bekannt. Sie werden in verschiedenen Haushaltsgeräten, aber auch im Automobilbau und in vielen weiteren Anwendungen eingesetzt.

Bei einer Relativbewegung zweier Schienenelemente gegeneinander rollen die Lagerwälzkörper auf gegenüberliegenden ersten und zweiten Laufflächen des ersten und des zweiten Schienenelements ab. Sie wälzen zwischen diesen ersten und zweiten Laufflächen. Die dabei entstehende Reibung ist geringer als eine unmittelbare Gleitreibung zwischen den Schienenelementen ohne Lagerwälzkörper.

Ein Wälzkörperkäfig dient dazu, eine gleichmäßige Verteilung der Lagerwälzkörper in der Auszugsrichtung zwischen den Laufflächen zweier gegeneinander beweglichen Schienenelementen zu gewährleisten. Dabei definiert der Wälzkörperkäfig einen Abstand der Lagerwälzkörper voneinander in der Auszugsrichtung.

Die aus dem Stand der Technik bekannten linearen Führungssysteme erfordern eine Schmierung mit einem Schmiermittel, um ein gleichmäßiges, geräuscharmes Verschieben zweier Schienenelemente relativ zueinander zu ermöglichen. Eine solche Schmierung wird beispielsweise durch Fetten des von den Schienenelementen und den Lagerwälzkörpern gebildeten linearen Wälzlagers erzielt.

Allerdings gibt es immer wieder Anwendungen, die eine Schmierung mit Schmiermitteln, beispielsweise aus hygienischen Gründen, nicht zulassen. Zudem gibt es Betriebssituationen, auch von grundsätzlich mit einem Schmiermittel versehenen linearen Führungssystemen, in denen noch kein Schmiermittel oder kein Schmiermittel mehr auf den einzelnen Lagerwälzkörpern oder den Laufflächen der Schienenelemente vorhanden ist. Ein Beispiel für eine solche Betriebssituation ist ein in einem pyrolysefähigen Ofen verbautes lineares Führungssystem nach einer Pyrolyse.

Die EP 2 481 990 A1 offenbart eine Auszugsführung für einen Backofen oder für eine Spülmaschine. Dabei umfasst die Auszugsführung eine Führungsschiene, eine Laufschiene und Wälzkörper, die an der Führungsschiene und/oder der Laufschiene abrollen und die in einem Käfig gehalten sind. Um eine Auszugsführung vorzuschlagen, die auch für hohe Temperaturen geeignet ist, umfasst die Auszugsführung einen temperaturfesten Festschmierstoff zum Schmieren der Abrollbewegung der Wälzkörper. EP 2 481 990 A1 offenbart einen Wälzkörperkäfig gemäß dem Oberbegriff des Anspruchs 1.

Die JP 2006-200634 A offenbart ein für die Drehwellenstützstruktur eines Kompressors verwendetes Axialrollenlager mit einer Rolle und einem Käfig auf. Der Käfig weist eine Vielzahl von Taschen zur Lagerung der Rolle auf einer Fläche auf, die sich mit der Lagerdrehachse kreuzt. Eine Wandoberfläche der Taschen weist eine Vielzahl von Rollenkontaktteilen und auf, die von der Wandoberfläche gegenüber einer äußeren Umfangsoberfläche der Rolle vorstehen, und ein Rollenkontaktteil ist in einer von den Rollenkontaktteilen zurückgesetzten Position angeordnet. In einem Eckteil auf der Rollenkontaktseite der Rollenkontaktteile sind Rollenstoppteile ausgebildet, die ein Herausrutschen der Rolle verhindern, die durch Oberflächenstanzbearbeitung gebildet sind, und Rollenführungsflächen, die die Drehung der Rolle auf der Bearbeitungsoberfläche führen.

Die DE 199 55 039 A1 offenbart eine automatische Schmiervorrichtung für eine Linearführung, deren Ölspeicher das Schmieröl aufnimmt, das mit Hilfe eines Faserstücks aufgrund der Kapillarwirkung in den Rücklaufkanal eingeleitet wird, so dass die Wälzkörper im Führungswagen geschmiert werden. Mit der Konstruktion erhält man aufgrund der geringen Ölleckage eine langfristige Schmierung.

Die DE 199 49 239 A1 offenbart ferner eine Teleskopauszugsvorrichtung für Gargutträger im Garraum von Haushaltsbacköfen, wobei die in verschiedenen Backraumebenen bewegbaren Gargutträger unter Verwendung von in Führungen über Kugel- oder Rollenlager verschiebbaren Teleskopschienen aus dem Garraum herausziehbar sind. Zwecks Aufrechterhaltung der Gleitfähigkeit der Kugel- oder Rollenlager auch nach einer Reinigung in einer Geschirrspülmaschine oder einer Pyrolyse bestehen die Kugeln oder Rollen aus einem selbstschmierenden, chemisch und thermisch beständigen Werkstoff.

Demgegenüber ist es eine Aufgabe der vorliegenden Erfindung, einen Wälzkörperkäfig für ein lineares Führungssystem zur Verfügung zu stellen, bei welchem die Geräuschentwicklung bei einer Relativbewegung zweier Schienenelemente gegeneinander auch ohne einen zusätzlichen Schmierstoff reduziert ist. Zudem ist es eine Aufgabe der vorliegenden Erfindung, einen Wälzkörperkäfig für ein lineares Führungssystem zur Verfügung zu stellen, bei welchem der Lauf und damit die Haptik einer Relativbewegung zweier Schienenelemente gegeneinander auch ohne ein zusätzliches Schmiermittel verbessert ist.

Zumindest eine der zuvor genannten Aufgaben wird durch einen Wälzkörperkäfig für ein lineares Führungssystem nach Anspruch 1 gelöst. Dabei weist der Übergang zwischen einer der zwei Deckflächen und der Seitenfläche des Wälzkörperkäfigs zumindest abschnittsweise eine gebrochene Kante, eine Kante mit einer Fase oder eine Rundung auf.

Darüber hinaus wird zumindest eine der zuvor genannten Aufgaben auch durch ein lineares Führungssystem gelöst. Dabei umfasst das lineare Führungssystem ein erstes Schienenelement mit zwei ersten Laufflächen, ein zweites Schienenelement mit zwei zweiten Laufflächen, einen Wälzkörperkäfig gemäß einer Ausführungsform der vorliegenden Erfindung, und eine Mehrzahl von Lagerwälzkörpern. Jeweils mindestens einer aus der Mehrzahl von Lagerwälzkörpern ist in einer aus der Mehrzahl von Durchbrechungen des Wälzkörperkäfigs aufgenommen, wobei die Seitenfläche der Durchbrechung oder der Übergang zwischen einer der zwei Deckflächen und der Seitenfläche in Kontakt mit einer Wälzkörperoberfläche des in der Durchbrechung aufgenommenen Lagerwälzkörper ist. Der Wälzkörperkäfig positioniert die Mehrzahl von Lagerwälzkörpern zwischen den ersten Laufflächen des ersten Schienenelements und den zweiten Laufflächen des zweiten Schienenelements, sodass das erste Schienenelement und das zweite Schienenelement derart aneinandergelagert sind, dass das erste Schienenelement und das zweite Schienenelement in und entgegen einer Auszugsrichtung linear gegeneinander verschiebbar sind.

Ein Wälzkörperkäfig besteht in der Regel aus einem flachen, ausgedehnten Material, insbesondere aus einem Blech bzw. Metallblech.

Man kann das Material des Wälzkörperkäfigs als ein ausgedehntes Material mit einer endlichen Dicke betrachten. Daher werden die beiden Deckflächen von den ausgedehnten Oberflächen des Materials, insbesondere des Blechs, gebildet. Demgegenüber erstreckt sich die Seitenfläche der Durchbrechung entlang der Dicke des Materials und in einer Ausführungsform im Wesentlichen senkrecht zu den Deckflächen.

Die Durchbrechungen sind in das flache ausgedehnte Material des Käfigs eingebracht. Ein Bereich des Wälzkörperkäfigs, in dem eine Mehrzahl von Durchbrechungen linear hintereinander angeordnet sind, so dass die darin aufgenommenen Wälzkörper in der Auszugsrichtung hintereinander und zwischen dem gleichen Paar von Laufflächen der Schienenelemente angeordnet sind, bildet einen Aufnahmeabschnitt. In einer Ausführungsform sind zwei durch einen Verbindungsabschnitt verbundene Aufnahmeabschnitte gegenüber dem Verbindungsabschnitt abgewinkelt. In einer Ausführungsform liegen jedoch zwei Aufnahmeabschnitte und der sie verbindende Verbindungsabschnitt in einer Ebene. In einer Ausführungsform bilden zwei Aufnahmeabschnitte und der sie verbindende Verbindungsabschnitt eine gekrümmte Fläche.

In einem Wälzkörperkäfig für ein lineares Führungssystem liegt die Mehrzahl von Durchbrechungen eines jeden Aufnahmeschenkels zum Aufnehmen der Wälzkörper auf einer Geraden, so dass sich in einem Betrieb des Wälzkörperkäfigs die Drehachsen der Wälzkörper im Wesentlichen senkrecht zu der Geraden ausrichten oder derart ausgerichtet sind.

Die Durchbrechungen sind in einer Ausführungsform an einer Kante des flachen ausgedehnten Materials angeordnet und dort offen. In einer Ausführungsform der Erfindung hat die Seitenfläche jeder Durchbrechung in einer Querschnittsebene parallel zu einer der Deckflächen einen Verlauf, der dem griechischen Großbuchstaben Omega nachempfunden ist. In einer alternativen Ausführungsform ist die Durchbrechung vollumfänglich von dem flachen, ausgedehnten Material des Wälzkörperkäfigs umgeben. In einer Ausführungsform der Erfindung hat die Seitenfläche jeder Durchbrechung dann in einer Querschnittsebene parallel zu einer der Deckflächen einen in etwa kreisförmigen Verlauf oder einen polygonalen Verlauf.

Durch das Ausnehmen des Materials des Wälzkörperkäfigs im Bereich der Durchbrechungen weisen die Durchbrechungen jeweils eine Seitenfläche auf, die eine Höhe hat, die im Wesentlichen gleich der Dicke des Materials des Wälzkörperkäfigs ist. Dort wo sich die Seitenfläche und die jeweilige Deckfläche schneiden, bilden sie im Stand der Technik eine Kante mit einem Winkel von etwa 90 Grad aus.

Der Kontakt zwischen dem jeweiligen Lagerwälzkörper und dem Wälzkörperkäfig erfolgt primär an dieser Kante. Erfindungsgemäß ist diese scharfe Kante am Übergang zwischen einer der Deckflächen und der Seitenfläche der Durchbrechung durch einen Übergang, der zumindest abschnittsweise eine gebrochene Kante, eine Kante mit einer Fase oder eine Rundung aufweist, ersetzt.

Der vorliegenden Erfindung liegt die Idee zugrunde, die akustischen Eigenschaften eines linearen Führungssystems mit in einem Wälzkörperkäfig zwischen zwei relativ gegeneinander bewegbaren ersten und zweiten Schienenelementen geführten Lagerwälzkörpern auch ohne ein zusätzliches Schmiermittel zu optimieren. Dabei wird primär ein Quietschen der Schiene ohne Schmiermittel vermieden oder reduziert. Darüber hinaus wird ein weicher Lauf der Schiene erzielt und eine angenehmere Haptik für den Benutzer bei der Bedienung des linearen Führungssystems bereitgestellt.

Die Optimierung der Geräuschentwicklung erfolgt erfindungsgemäß durch rein konstruktive mechanische Maßnahmen. Der Erfindung liegt die Erkenntnis zugrunde, dass die primäre Ursache der Geräuschentwicklung, insbesondere des Entstehens eines Quietschgeräusches, der Kontakt zwischen einem Lagerwälzkörper und dem Wälzkörperkäfig ist. Die erfindungsgemäße Lösung basiert darauf, die für das Quietschen zumindest mitverantwortliche scharfe Kante zu vermeiden oder zumindest zu verkleinern.

In einer Ausführungsform sind beide Kanten, welche die Seitenfläche der Durchbrechung mit den beiden einander gegenüberliegenden Deckflächen des Wälzkörperkäfigs im Stand der Technik bildet, jeweils zumindest abschnittsweise durch einen Übergang mit einer gebrochene Kante, einer Kante mit einer Fase oder einer Rundung ersetzt. In einer alternativen Ausführungsform ist nur die mit dem in der Durchbrechung aufgenommenen Wälzkörper in Kontakt kommende Kante aus dem Stand der Technik durch einen Übergang mit einer gebrochene Kante, einer Kante mit einer Fase oder einer Rundung ersetzt.

Um eine scharfe Kante zwischen der jeweiligen Deckfläche des Wälzkörperkäfigs und der Seitenfläche der Durchbrechung zu vermeiden und einen Übergang zwischen der Deckfläche und der Seitenfläche bereitzustellen, gibt es eine Vielzahl von Möglichkeiten.

In einer Ausführungsform der Erfindung erfolgt das Ausbilden des Übergangs zwischen einer der zwei Deckflächen und der Seitenfläche durch spanabhebende Bearbeitung, beispielsweise durch Fräsen einer Fase im Bereich des Übergangs zwischen der Deckfläche und der Seitenfläche.

In einer Ausführungsform der Erfindung ist der Wälzkörperkäfig erhältlich durch ein Verfahren, welches ein Druckluftstrahlen des Wälzkörperkäfigs mit einem festen Strahlmittel, beispielsweise Sand oder Trockeneis, umfasst. Ein solches Druckluftstrahlen des Wälzkörperkäfigs führt dazu, dass die ursprünglich im Wesentlichen rechtwinkligen Kanten gebrochen bzw. abgerundet werden.

Gemäß einer weiteren Ausführungsform der Erfindung ist der Wälzkörperkäfig erhältlich durch ein Verfahren, welches ein Gleitschleifen des Wälzkörperkäfigs umfasst. Auch ein Gleitschleifen des Wälzkörperkäfigs führt dazu, dass die ursprünglich im Wesentlichen rechtwinkligen Kanten gebrochen bzw. abgerundet werden.

Das Gleitschleifen ist ein trennendes Verfahren zur Oberflächenbearbeitung, insbesondere von metallischen Werkstücken, d.h. vorliegend von Wälzkörperkäfigen. Die zu bearbeitenden Werkstücke werden zusammen mit Schleifkörpern und optional einem Zusatzmittel in wässriger Lösung als Schüttgut in einen Arbeitsbehälter gegeben. Durch eine oszillierende oder rotierende Bewegung des Arbeitsbehälters entsteht eine Relativbewegung zwischen Werkstück und Schleifkörpern, die einen Materialabtrag am Werkstück, insbesondere an dessen Kanten, hervorruft. Das Verfahren ist in der DIN 8589 definiert und wird dort Gleitspanen genannt. Häufig wird das Gleitschleifen auch als Trowalisieren (eingetragene Marke; nach dem Unternehmen Walter Trowal) bezeichnet. Das Gleitschleifen führt insbesondere zu einem Kantenverrunden.

Gemäß einer Ausführungsform der Erfindung ist der Wälzkörperkäfig erhältlich durch ein Verfahren, welches ein Prägen des Übergangs zwischen der Seitenwandfläche und der Deckfläche mit einem Umformwerkzeug umfasst, sodass eine Rundung ausgebildet wird, wobei ein Verlauf der Rundung durch eine Form des Umformwerkzeugs vorgegeben ist.

In einer solchen Ausführungsform ist es zweckmäßig, wenn ein Blech, aus dem der Wälzkörperkäfig vorzugsweise besteht, nach dem Stanzen oder Schneiden der Durchbrechungen und vor dem Biegen im Bereich der Durchbrechungen mit dem Umformwerkzeug geprägt wird.

Die zuvor genannten Verfahrensschritte zum Ausbilden des erfindungsgemäßen Übergangs zwischen zumindest einer der zwei Deckflächen und der Seitenfläche setzen voraus, dass vor diesen Schritten bereits die Durchbrechungen in das Material des Wälzkörperkäfigs eingebracht sind.

In einer Ausführungsform der Erfindung umfasst ein Verfahren zum Erhalten des Wälzkörperkäfigs mit einem der zuvor beschriebenen Schritte zum Fasen, Brechen oder Verrunden der Kanten, ein Stanzen oder Schneiden eines Blechs, so dass die Durchbrechungen ausgebildet werden und ein Biegen, so dass die Aufnahmeabschnitte gegenüber dem oder den Verbindungsabschnitten abgewinkelt sind.

In einer Ausführungsform der Erfindung umfasst ein Verfahren zum Erhalten des Wälzkörperkäfigs einen Feinguss anstelle eines Verfahrens mit Stanzen oder Schneiden und Biegen.

Für eine Geräuschreduzierung des gesamten linearen Führungssystems ist es bereits ausreichend, wenn eine einzige Durchbrechung den erfindungsgemäßen Übergang zwischen einer der zwei Deckflächen und der Seitenfläche aufweist. In einer Ausführungsform jedoch ist diese Bedingung für eine Mehrzahl, vorzugsweise für alle aus der Mehrzahl von Durchbrechungen erfüllt.

Unter einem Wälzkörper wird ein Rotationskörper verstanden, der als Element eines Wälzlagers die Reibung zwischen zwei Schienenelementen erheblich reduziert und damit eine Relativbewegung der zwei Schienenelemente zueinander erleichtert. Wälzkörper sind beispielsweise Kugeln, Rollen, Tonnen, Nadeln oder Kegel. In einer Ausführungsform der vorliegenden Erfindung sind die Wälzkörper Kugeln. Es versteht sich, dass in diesem Fall der Wälzkörperkäfig ein Kugelkäfig ist.

Gemäß einer Ausführungsform der Erfindung ist genau ein Wälzkörper in jeder Durchbrechung angeordnet. Es gibt jedoch auch Ausführungsformen, bei denen mehr als ein Wälzkörper in einer einzigen Durchbrechung angeordnet ist. In einer solchen Ausführungsform sind beispielsweise zwei Wälzkörper in der gleichen Durchbrechung durch einen Abstandshalter mit oder aus einem Schmiermittel auf Abstand voneinander gehalten.

In einer Ausführungsform der Erfindung ist der Wälzkörperkäfig aus einem Material gefertigt, das ausgewählt ist aus einer Gruppe bestehend aus Metallblech, Stahlblech, aluminiertem Stahlblech, Edelstahl und Kunststoff.

In einer Ausführungsform der Erfindung besteht der Käfig aus einem Material, welches zumindest hitzebeständig oder lebensmittelecht ist.

In der Ausführungsform der Erfindung besteht der Wälzkörperkäfig aus einem Material, das weicher ist als ein Material der Lagerwälzkörper, insbesondere weicher als ein Material, aus dem die Lagerwälzkörper bestehen.

In einer Ausführungsform der Erfindung besteht der Wälzkörperkäfig aus Messing oder Bronze. Messing und Bronze sind Beispiele für Materialien, welche weicher sind als das typische Material der Lagerwälzkörper, beispielsweise Stahl.

Dabei werden in der vorliegenden Anmeldung diejenigen Wälzkörper des linearen Führungssystems als Lagerwälzkörper bezeichnet, die im Betrieb Lasten von dem ersten Schienenelement auf das zweite Schienenelement oder umgekehrt übertragen. In einer Ausführungsform der Erfindung sind die Lagerwälzkörper aus Stahl hergestellt.

Gemäß einer Ausführungsform der vorliegenden Erfindung ist zumindest einer aus der Mehrzahl von Lagerwälzkörpern eine Kugel, wobei die Kugel eine Mehrzahl von Symmetrieebenen aufweist, wobei die Mehrzahl von Symmetrieebenen eine durch den Mittelpunkt der Kugel und senkrecht zu der Auszugsrichtung verlaufende Gerade enthalten, wobei entweder die Fase in zumindest einer aus der Mehrzahl von Symmetrieebenen gerade verläuft, konvex gekrümmt ist oder konkav gekrümmt ist oder die Rundung in zumindest einer aus der Mehrzahl von Symmetrieebenen konvex gekrümmt ist oder konkav gekrümmt ist.

In einer Ausführungsform verläuft die Fase in einer Mehrzahl der zuvor definierten Symmetrieebenen, vorzugsweise in allen zuvor definierten Symmetrieebenen gerade, ist konvex gekrümmt oder ist konkav gekrümmt. In einer Ausführungsform ist die Rundung in einer Mehrzahl der Symmetrieebenen, vorzugsweise in allen Symmetrieebenen konvex gekrümmt oder konkav gekrümmt.

In einer Ausführungsform ist die konkave oder konvexe Krümmung stetig. D.h. der Krümmungsradius ändert sich nicht oder nur stetig. Auf diese Weise wird die Ausbildung von Kanten, die eine Geräuschentwicklung nach sich ziehen können, vermieden.

Mit anderen Worten ausgedrückt hat in einer solchen Ausführungsform der Übergang zwischen der Seitenfläche und der jeweiligen Deckfläche einen im Wesentlichen in einer Umfangsrichtung konstanten Querschnitt. Eine solche Ausgestaltung mit einem sich in der Umfangsrichtung der Durchbrechung und damit des Lagerwälzkörpers bzw. der Kugel, nicht ändernden Querschnittsprofil lässt sich auf verschiedene Weisen erzielen.

Gemäß einer Ausführungsform der Erfindung weist das Material des Wälzkörperkäfigs, insbesondere ein Blech des Wälzkörperkäfigs, eine Dicke auf, wobei die Fase oder die Rundung einen Krümmungsradius aufweist, wobei der Krümmungsradius gleich der Dicke des Wälzkörperkäfigs, vorzugsweise 1/2 oder weniger, bevorzugt 1/4 oder weniger und besonders bevorzugt 1/5 oder weniger der Dicke des Wälzkörperkäfigs beträgt.

In einer alternativen Ausführungsform ist der Krümmungsradius größer als die Dicke des Wälzkörperkäfigs.

In einer Ausführungsform der Erfindung weist der Wälzkörperkäfig genau zwei Aufnahmeabschnitte auf, so dass der Wälzkörperkäfig Wälzkörper zwischen genau zwei ersten Laufflächen des ersten Schienenelements und genau zwei Laufflächen des zweiten Schienenelements führt. Dabei sind die ersten Laufflächen des ersten Schienenelements den zweiten Laufflächen des zweiten Schienenelement paarweise gegenüberliegend angeordnet. In einer Ausführungsform der Erfindung weist dabei der Wälzkörperkäfig in einer Richtung senkrecht zur Auszugsrichtung einen im Wesentlichen U-förmigen bzw. C-förmigen Querschnitt auf. Dieser Querschnitt wird von den zwei Aufnahmeabschnitten und einem diese beiden Aufnahmeabschnitte verbindenden Verbindungsabschnitt gebildet, wobei die beiden Aufnahmeabschnitte jeweils entlang einer sich in der Auszugsrichtung erstreckenden Kante, insbesondere einer Biegekante, gegenüber dem Verbindungsabschnitt abgewinkelt sind. Der Verbindungsabschnitt bildet in einer solchen Ausführungsform einen Käfigrücken des Wälzkörperkäfigs. Die Aufnahmeabschnitte werden in einer solchen Ausführungsform auch als Aufnahmeschenkel bezeichnet.

In einer Ausführungsform ist jede aus der Mehrzahl von Durchbrechungen derart ausgestaltet, dass der jeweilige Wälzkörper nicht durch die Durchbrechung hindurchfallen kann. Sind die Wälzkörper Kugeln, so ist eine minimale Abmessung, vorzugsweise ein minimaler Radius der Durchbrechung kleiner als der Kugelradius.

In einer Ausführungsform der Erfindung ist jeder der Aufnahmeabschnitte entlang einer Geraden, welche alle Durchbrechungen schneidet, abgewinkelt. Durch das Abwinkeln erhält jede Durchbrechung eine definierte Auflage, an der der Wälzköper in Kontakt mit dem Wälzkörperkäfig kommt. Zudem verringert in einer Ausführungsform der Erfindung die Abwinklung eine minimale Abmessung, vorzugsweise einen minimalen Radius der Durchbrechung so, dass der jeweilige Wälzkörper nicht hindurchfallen kann. In einer Ausführungsform der Erfindung sind nicht nur die Aufnahmeabschnitte gegenüber dem Verbindungsabschnitt abgebogen, so dass sie Aufnahmeschenkel bilden, sondern jeder der Aufnahmeschenkel ist entlang einer Geraden, welche alle Durchbrechungen schneidet, abgewinkelt, so wie es zuvor allgemein beschrieben wurde.

In einer alternativen Ausführungsform der Erfindung weist der Wälzkörperkäfig mehr als zwei, insbesondere genau drei oder genau vier Aufnahmeabschnitte auf. Ein solcher Wälzkörperkäfig führt Wälzkörper zwischen mehr als zwei ersten Laufflächen des ersten Schienenelements und mehr als zwei Laufflächen des zweiten Schienenelements. Dabei sind die Laufflächen des ersten Schienenelements den Laufflächen des zweiten Schienenelements paarweise gegenüberliegende angeordnet. In einer solchen Ausführungsform weist der Wälzkörperkäfig mindestens zwei Verbindungsabschnitte auf, die jeweils zwei Aufnahmeabschnitte miteinander verbinden.

Gemäß einer Ausführungsform der Erfindung weist der Wälzkörperkäfig eine Dicke auf, die mindestens 5 % des Radius des Lagerwälzkörpers beträgt und vorzugsweise mindestens 7,5 % des Radius des Lagerwälzkörpers beträgt. In einer Ausführungsform der Erfindung ist der Lagerwälzkörper eine Kugel, wobei der Wälzkörperkäfig eine Dicke aufweist, die mindestens 5 % des Kugelradius beträgt und vorzugsweise mindestens 7,5 % des Kugelradius beträgt.

Dabei wird als Dicke des Wälzkörperkäfigs seine Materialstärke bezeichnet. Ist der Wälzkörperkäfig aus einem Blech gefertigt, so ist die Dicke des Wälzkörperkäfigs durch die Dicke des

Blechs gegeben. Es hat sich herausgestellt, dass je größer die Dicke des Wälzkörperkäfigs ist, desto geringer ist die Geräuschentwicklung bei einer Relativbewegung des ersten Schienenelements gegenüber dem zweiten Schienenelement.

In einer Ausführungsform der Erfindung beträgt aber die Dicke des Wälzkörperkäfigs höchstens 50 % des Radius des Lagerwälzkörpers, vorzugsweise höchstens 20 % des Radius des Lagerwälzkörpers und besonders bevorzugt höchstens 15 % des Radius des Lagerwälzkörpers. In einer Ausführungsform der Erfindung beträgt die Dicke des Wälzkörperkäfigs höchstens 50 % des Kugelradius, vorzugsweise höchstens 20 % des Kugelradius und besonders bevorzugt höchstens 15 % des Kugelradius.

In einer Ausführungsform der Erfindung hat der Wälzkörperkäfig eine Dicke von 0,6 mm oder mehr. In einer Ausführungsform der Erfindung hat der Wälzkörperkäfig eine Dicke von 3 mm oder weniger, vorzugsweise von 1,5 mm oder weniger und besonders bevorzugt von 1 mm oder weniger.

Gemäß einer Ausführungsform der Erfindung weist das lineare Führungssystem neben der Mehrzahl von Lagerwälzkörpern eine Mehrzahl von Schmiermittelwälzkörpern auf, wobei die Schmiermittelwälzkörper ein Schmiermittel umfassen oder aus einem Schmiermittel bestehen.

Die Schmiermittelwälzkörper geben das Schmiermittel während des Betriebs des linearen Führungssystems an die Lagerwälzkörper und den Wälzkörperkäfig ab. Sie sorgen für eine Schmierung des linearen Wälzlagers. In einer Ausführungsform der Erfindung ist das Schmiermittel Graphit. In einer Ausführungsform ist die Mehrzahl von Lagerwälzkörpern aus einem Material hergestellt, das eine größere Härte aufweist als das Schmiermittel der Schmiermittelwälzkörper.

In einer Ausführungsform der Erfindung sind in jedem der Aufnahmeabschnitte des Wälzkörperkäfigs mindestens zwei Lagerwälzkörper und mindestens ein Schmiermittelwälzkörper aufgenommen.

Für die Schmiermittelwälzkörper muss die erfindungsgemäße Ausbildung des Übergangs zwischen einer der zwei Deckflächen und der Seitenfläche nicht notwendigerweise eingehalten werden.

In der vorliegenden Anmeldung bezeichnet die Auszugsrichtung diejenige Richtung, in der das erste Schienenelement und das zweite Schienenelement relativ gegeneinander bewegt werden, um von einer ersten Endposition in eine zweite Endposition zu gelangen. In einer Ausführungsform der Erfindung ist die erste Endposition eine Einzugsposition und die zweite Endposition eine Auszugsposition. Bei einer Teleskopschiene bezeichnet die Einzugsposition diejenige Position des ersten und des zweiten Schienenelements relativ zueinander, in welcher die Teleskopschiene vollständig eingeschoben ist. Die Auszugsposition bezeichnet dann diejenige Position des ersten und des zweiten Schienenelements relativ zueinander, in welcher die Teleskopschiene maximal ausgezogen ist. Entsprechend ist eine Richtung entgegen der Auszugsrichtung diejenige Richtung, in welche die ersten und zweiten Schienenelemente relativ zueinander bewegt werden, um von der zweiten Endposition wieder in die erste Endposition zu gelangen.

Gemäß der vorliegenden Erfindung weist das lineare Führungssystem ein erstes Schienenelement und ein zweites Schienenelement auf. Dies schließt nicht aus, dass das lineare Führungssystem, insbesondere wenn es sich um eine Teleskopschiene handelt, weitere Schienenelemente, insbesondere drei Schienenelemente, beispielsweise zum Bereitstellen eines Vollauszugs, umfasst.

In einer Ausführungsform der Erfindung ist zumindest das erste Schienenelement oder das zweite Schienenelement aus einem Material gefertigt, das ausgewählt ist aus einer Gruppe bestehend aus Metallblech, Stahlblech, aluminimiertem Stahlblech und Edelstahl.

In einer Ausführungsform der Erfindung weisen das erste Schienenelement und das zweite Schienenelement jeweils einen Schienenrücken und mit dem Schienenrücken verbundene Laufflächen auf, wobei die Laufflächen eines Schienenelements je nach Anordnung zueinander hin oder voneinander weg zeigen. Das Querschnittsprofil eines solchen Schienenelements in einer Querschnittsebene im Wesentlichen senkrecht zur Auszugsrichtung ist in einer auszugsform im Wesentlichen C-förmig.

Der Begriff lineares Führungssystem ist so allgemein zu verstehen, sodass nicht nur Schienen davon umfasst sind, bei denen das erste Schienenelement und das zweite Schienenelement in etwa die gleiche Länge aufweisen, d.h. insbesondere Teleskopschienen, sondern auch Linearführungen, bei denen das zweite Schienenelement deutlich kürzer ist als das erste Schienenelement. In einer Ausführungsform der Erfindung ist das lineare Führungssystem daher ausgewählt aus einer Gruppe bestehend aus einer Auszugsführung, einer Teleskopschiene und einer Linearführung.

Zumindest eine der zuvor genannten Aufgaben wird auch gelöst durch ein Verfahren zum Herstellen eines Wälzkörperkäfigs für ein lineares Führungssystem gemäß dem darauf gerichteten unabhängigen Anspruch. Dazu weist ein Verfahren der eingangs genannten Art zusätzlich den Schritt auf: Bearbeiten des Übergangs zwischen einer der zwei Deckflächen und der Seitenfläche, so dass der Übergang zumindest abschnittsweise eine gebrochene Kante, eine Kante mit einer Fase oder eine Rundung aufweist.

Soweit im folgenden Aspekte der Erfindung im Hinblick auf das Herstellungsverfahren beschrieben werden, gelten diese auch für den Wälzkörperkäfig oder das lineare Führungssystem und umgekehrt. Soweit der Wälzkörperkäfig oder das lineare Führungssystem mit einem Verfahren gemäß dieser Erfindung hergestellt wird, so weist dieser die entsprechenden damit erzeugten Merkmale auf. Insbesondere sind Ausführungsformen des Verfahrens zum Herstellen zuvor beschriebener Ausführungsformen des Wälzkörperkäfigs oder des linearen Führungssystems geeignet.

Gemäß einer Ausführungsform der Erfindung umfasst das Bearbeiten des Übergangs zumindest einen Schritt umfasst, der ausgewählt ist aus Druckluftstrahlen des Materialabschnitts mit einem festen Strahlmittel, Gleitschleifen des Materialabschnitts, Prägen des Übergangs zwischen der Seitenwandfläche und der Deckfläche mit einem Umformwerkzeug, so dass die Rundung ausgebildet wird, wobei ein Verlauf der Rundung durch eine Form des Umformwerkzeugs vorgegeben ist, und spanabhebendes Bearbeiten des Übergangs zwischen der Seitenwandfläche und der Deckfläche. In einer Ausführungsform umfasst das Verfahren einer Kombination zweier oder mehr der genannten Schritte.

In einer Ausführungsform umfasst das Bereitstellen des Materialabschnitts die Schritte: Bereitstellen eines Streifens aus einem Blech und Ausschneiden oder Ausstanzen der Mehrzahl von Durchbrechungen.

In einer Ausführungsform erfolgt nach dem Ausschneiden oder Ausstanzen der Mehrzahl von Durchbrechungen das Prägen des Übergangs zwischen der Seitenwandfläche und der Deckfläche mit einem Umformwerkzeug und nach dem Prägen erfolgt ein Abbiegen der Aufnahmeabschnitte gegenüber dem Verbindungsabschnitt. In einer Ausführungsform erhält so der Wälzkörperkäfig ein U-förmiges oder C-förmiges Profil.

In einer Ausführungsform erfolgt nach dem Prägen zusätzlich zu dem Abbiegen der Aufnahmeabschnitte gegenüber dem Verbindungsabschnitt ein Abwinkeln jeder der Aufnahmeabschnitte entlang einer Geraden, welche alle Durchbrechungen schneidet. Der Wälzkörperkäfig erhält dadurch ein C-förmiges Profil.

In einer Ausführungsform der Erfindung wird der gemäß einer der zuvor beschriebenen Ausführungsformen des Verfahrens hergestellter Wälzkörperkäfig zusammen mit einem ersten und einem zweiten Schienenelement sowie einer Mehrzahl von Wälzkörpern zu einem linearen Führungssystem zusammengefügt.

Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.
- Figur 1: ist eine Seitenansicht eines Blechstreifens für einen Kugelkäfig gemäß einer Ausführungsform der vorliegenden Erfindung.
- Figur 2: ist eine Draufsicht auf den Blechstreifen aus Figur 1.
- Figur 3: ist eine vergrößerte, entlang der Linie C-C geschnittene Seitenansicht des Blechstreifens aus Figur 2.
- Figur 4: ist eine vergrößerte Ansicht des mit dem Buchstaben F in Figur 3 markierten Bereichs.
- Figur 5: ist eine isometrische Darstellung eines Prägestempels.
- Figur 6: ist eine isometrische Darstellung einer zu dem Prägestempel aus Figur 5 komplementären Matrize.
- Figur 7: ist eine Draufsicht auf den Blechstreifen aus den Figuren 1 bis 4 nach dem Prägen.
- Figur 8: ist eine vergrößerte, entlang der Linie E-E geschnittene Seitenansicht des Blechstreifens aus Figur 7.
- Figur 9: ist eine vergrößerte Ansicht des mit dem Buchstaben G in Figur 8 markierten Bereichs.
- Figur 10: ist isometrische Darstellung des Kugelkäfigs nach dem Biegen des Blechstreifens aus den Figuren 7 bis 9.
- Figur 11: ist eine Draufsicht auf den Kugelkäfig aus Figur 10.
- Figur 12: ist eine vergrößerte, entlang der Linie H-H geschnittene Seitenansicht des Kugelkäfigs aus Figur 11.
- Figur 13: ist eine vergrößerte Ansicht des mit dem Buchstaben J in Figur 12 markierten Bereichs.
- Figur 14: ist eine isometrische Darstellung des Kugelkäfigs aus den Figuren 10 bis 13 mit daran aufgenommenen Lagerkugeln.
- Figur 15: ist eine geschnittene Seitenansicht des Kugelkäfigs mit den Lagerkugeln entlang der Linie K-K aus Figur 14.
- Figur 16: ist eine isometrische Darstellung eines linearen Führungssystems mit dem Kugelkäfig und den darin aufgenommenen Lagerkugeln aus den Figuren 14 und 15.
- Figur 17: ist eine vergrößerte Ansicht eines Bereichs einer alternativen Ausführungsform des Blechs, der in Figur 8 mit dem Buchstaben G markiert ist.

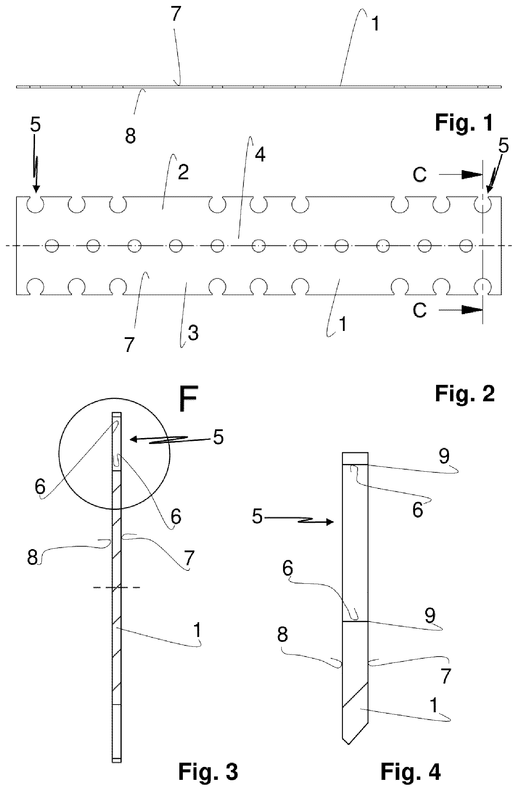

Die Figuren 1 bis 4 zeigen einen Blechstreifen 1 zum Herstellen eines erfindungsgemäßen Wälzkörperkäfigs in Form eines Kugelkäfigs 21. Dabei stellt der gezeigte Blechstreifen 2 nicht nur das Ausgangsmaterial für den erfindungsgemäßen Kugelkäfig 21 bereit, sondern verdeutlicht gleichzeitig auch den Stand der Technik.

Aus dem Blechstreifen 1 wird später durch Abbiegen zweier Aufnahmeabschnitte in Form von Aufnahmeschenkeln 2, 3 gegenüber einem Verbindungsabschnitt in Form eines Käfigrückens 4 der fertige Kugelkäfig 21 geformt. In den Aufnahmeschenkeln 2, 3 sind zum Rand hin offene Durchbrechungen 5 zum Aufnehmen der Wälzkörper in Form von Lagerkugeln 16 vorgesehen. Die Durchbrechungen 5 nehmen die Lagerkugeln 16 auf. Die Durchbrechungen 5 sind zum Rand des Blechs 1 hin offen, umgreifen die Kugeln aber um mehr als 180 Grad.

In der dargestellten Ausführungsform sind die Durchbrechungen 5 in das Blech des Kugelkäfigs 21 hineingestanzt. Durch das Stanzen sind die Seitenflächen 6 der Durchbrechungen und die Deckflächen 7 und 8 im Wesentlichen rechtwinklig zueinander. Dies ist gut in der vergrößerten Darstellung aus Figur 4 zu erkennen. Die rechtwinkligen Kanten der Durchbrechungen, dort wo sich die Seitenflächen 6 mit den Deckflächen 7, 8 schneiden, sind mit dem Bezugszeichen 9 bezeichnet.

Es hat sich gezeigt, dass solche rechtwinkligen Kanten 9 bei einem Wälzen der Lagerkugeln 16 zwischen den Laufflächen der ersten und zweiten Schienenelemente zu einer erhöhten Geräuschentwicklung führen, wenn die Lagerkugeln 16 mit diesen Kanten 9 in Kontakt kommen.

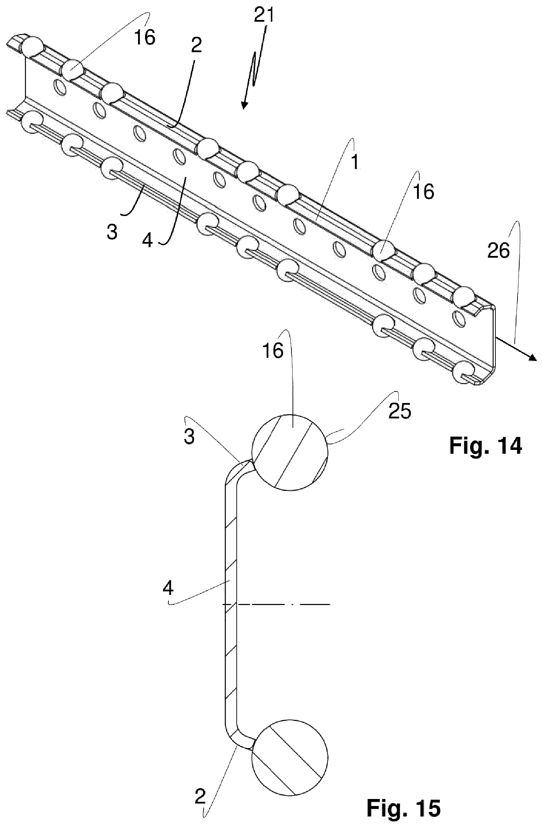

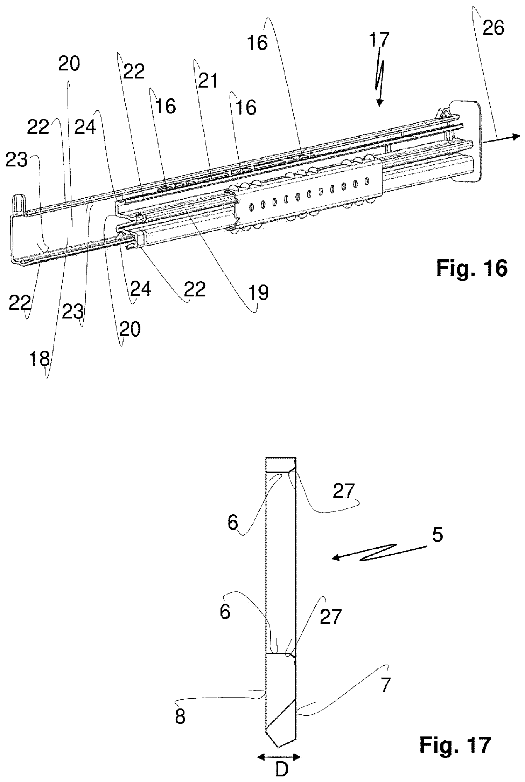

Erfindungsgemäß ist nun vorgesehen, diese rechtwinkligen Kanten 9 zu brechen, mit einer Fase zu versehen oder abzurunden. In der in den Figuren 1 bis 4 sowie 7 bis 16 dargestellten Ausführungsform sind die Kanten 9 abgerundet. Der Übergang zwischen der Seitenfläche 6 der Durchbrechung 5 und der Deckfläche 7 weist eine Rundung 10 auf. Demgegenüber hat die Ausführungsform aus Figur 17 eine lineare Fase 23 im Bereich des Übergangs zwischen der Seitenfläche 6 der Durchbrechung 5 und der Deckfläche 7.

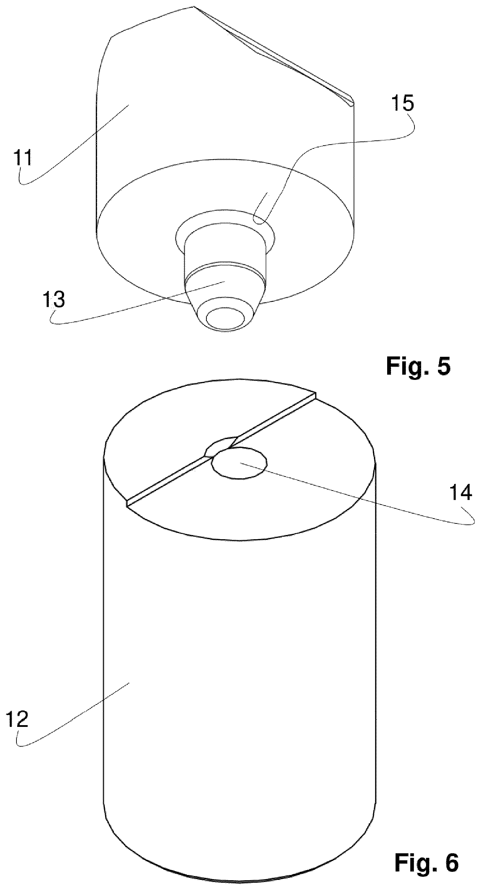

Zum Ausbilden der Rundung 10 der Ausführungsform der Figuren 1 bis 4 sowie 7 bis 16 wird jede Durchbrechung 5 mit einem Werkzeug, so wie es in den Figuren 5 und 6 gezeigt ist, geprägt, sodass die rechtwinklige Form der Kanten 9 durch eine abgerundete Form im Übergang zwischen der Deckfläche 7 und der Seitenfläche 6 der Durchbrechung 5 ersetzt wird.

Das Werkzeug setzt sich aus einem Stempel 11 und einem Gegenwerkzeug, d.h. einer Matrize 12, zusammen. Der Stempel ist in Figur 5 gezeigt, während die Matrize 12 in Figur 6 zu sehen ist.

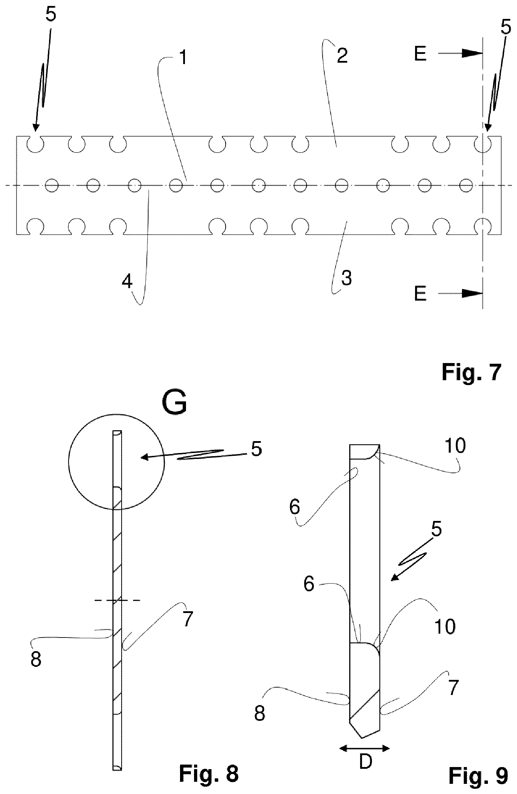

Der Stempel 11 verfügt über einen Zentrierpin 13, um den Stempel 11 zentriert in eine Zentrierbohrung 14 der Matrize 12 einzuführen. Die eigentliche formgebende Prägefläche ist in Figur 5 mit dem Bezugszeichen 15 bezeichnet. Diese Prägefläche 15 ist komplementär zu der Rundung, welche der Übergang zwischen der Seitenfläche 6 der Durchbrechung und den Deckflächen 7, 8 des Materials des Kugelkäfigs 21 erhalten soll. In der dargestellten Ausführungsform ist die Stempelfläche 15 ringförmig konkavkonvex, so dass die Stempelfläche 15 in jeder Schnittebene, welche die Symmetrieachse des Zentrierpins 13 enthält, einen konkaven Querschnitt aufweist. Dieser konkave Querschnitt führt beim Stempeln zu der in den Figuren 8 bis 13 gut erkennbaren konvexen Form des Übergangs zwischen der Seitenfläche 6 und der Deckfläche 7.

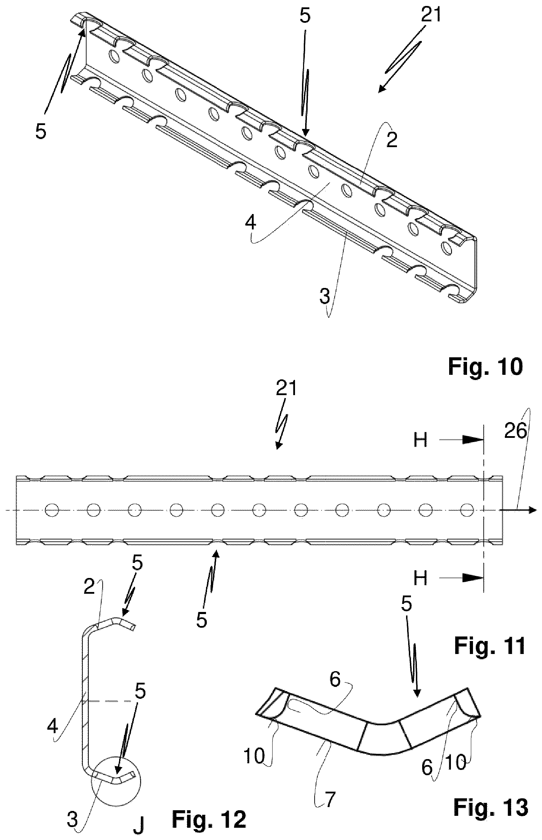

Nachdem das Prägen jeder der Durchbrechungen 5 abgeschlossen ist, werden die Aufnahmeschenkel 2, 3 gegenüber dem Kugelkäfigrücken 4 abgebogen, sodass der in den Figuren 10 bis 15 gezeigte fertige Kugelkäfig 21 gebildet wird. Dabei zeigen die vergrößerten Darstellungen der Figuren 12 und 13 den dann kalottenartigen Verlauf der Durchbrechungen 5 zwischen der Deckfläche 7 und der Seitenfläche 6.

Figur 16 zeigt das zusammengebaute lineare Führungssystem in Form einer Teleskopschiene 17, in welcher der Kugelkäfig 21 mit den Lagerkugeln 16 verbaut ist. Die Teleskopschiene 17 umfasst ein erstes Schienenelement 18 und ein zweites Schienenelement 19. Jedes der beiden C-förmigen Schienenelemente 18, 19 besteht aus einem Schienenrücken 20, welcher zwei Schenkel 22 miteinander verbindet. Dabei sind die Schenkel 22 gegenüber den jeweiligen Schienenrücken 20 abgebogen. Die Schenkel 22 der beiden Schienenelemente 18, 19 tragen jeweils zueinander hinzeigende Laufflächen. Dabei werden die Laufflächen des ersten Schienenelements als erste Laufflächen 23 bezeichnet und die Laufflächen des zweiten Schienenelements als zweite Laufflächen 24. Während einer Relativbewegung des ersten Schienenelements 18 gegenüber dem zweiten Schienenelement 19 wälzen die Lagerkugeln 16 zwischen den ersten Laufflächen 23 und den zweiten Laufflächen 24 der beiden Schienenelemente.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Elemente oder Schritte aus, und der unbestimmte Artikel "eine" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

### Bezugszeichenliste

- 1: Blechstreifen
- 2, 3: Aufnahmeschenkel
- 4: Käfigrücken
- 5: Durchbrechungen
- 6: Seitenfläche
- 7, 8: Deckfläche
- 9: Kante
- 10: Rundung
- 11: Stempel
- 12: Matrize
- 13: Zentrierpin
- 14: Zylinderbohrung
- 15: Prägefläche
- 16: Lagerkugeln
- 17: Teleskopschiene
- 18: erstes Schienenelement
- 19: zweites Schienenelement
- 20: Schienenrücken
- 21: Kugelkäfig
- 22: Schenkel
- 23: erste Laufflächen
- 24: zweite Laufflächen
- 25: Kugeloberfläche
- 26: Auszugsrichtung
- 27: Fase

## Patentansprüche

1. Wälzkörperkäfig (21) für ein lineares Führungssystem (17) mit
zwei Aufnahmeabschnitten (2, 3) und einem die zwei Aufnahmeabschnitte (2, 3) verbindenden Verbindungsabschnitt (4),
wobei jeder der zwei Aufnahmeabschnitte (2, 3) zwei ausgedehnte Deckflächen (7, 8) aufweist,
wobei die zwei Aufnahmeabschnitte (2, 3) jeweils eine Mehrzahl von Durchbrechungen (5) aufweisen,
wobei jede Durchbrechung (5) eine die zwei Deckflächen (7, 8) verbindende Seitenfläche (6) aufweist,
wobei jeweils mindestens einer aus einer Mehrzahl von Lagerwälzkörpern (16) in einer aus der Mehrzahl von Durchbrechungen (5) des Wälzkörperkäfigs (21) aufnehmbar ist, so dass die Seitenfläche (6) der Durchbrechung (5) oder ein Übergang zwischen einer der zwei Deckflächen (7, 8) und der Seitenfläche (6) in Kontakt mit einer Wälzkörperoberfläche (25) des in der Durchbrechung (5) aufnehmbaren Lagerwälzkörpers (16) bringbar ist,
**dadurch gekennzeichnet, dass**
der Übergang zwischen einer der zwei Deckflächen (7, 8) und der Seitenfläche (6) zumindest abschnittsweise eine gebrochene Kante, eine Kante mit einer Fase (23) oder eine Rundung (10) aufweist.

2. Wälzkörperkäfig (21) nach dem vorhergehenden Anspruch, wobei der Wälzkörperkäfig (21) aus einem Blech besteht.

3. Wälzkörperkäfig (21) nach dem vorhergehenden Anspruch, wobei der Wälzkörperkäfig (21) erhältlich ist durch ein Verfahren, welches ein Druckluftstrahlen des Wälzkörperkäfigs (21) mit einem festen Strahlmittel umfasst.

4. Wälzkörperkäfig (21) nach einem der vorhergehenden Ansprüche, wobei der Wälzkörperkäfig (21) erhältlich ist durch ein Verfahren, welches ein Gleitschleifen des Wälzkörperkäfigs (21) umfasst.

5. Wälzkörperkäfig (21) nach einem der vorhergehenden Ansprüche, wobei der Wälzkörperkäfig (21) erhältlich ist durch ein Verfahren, welches ein Prägen des Übergangs zwischen der Seitenwandfläche (6) und der Deckfläche (7) mit einem Umformwerkzeug (11, 12) umfasst, so dass die Rundung (10) ausgebildet wird, wobei ein Verlauf der Rundung (10) durch eine Form des Umformwerkzeugs (11, 12) vorgegeben ist, oder durch ein spanabhebendes Verfahren.

6. Wälzkörperkäfig (21) nach einem der vorhergehenden Ansprüche, wobei der Wälzkörperkäfig (21) aus Messing oder Bronze hergestellt ist.

7. Lineares Führungssystem (17) mit
einem ersten Schienenelement (18) mit zwei ersten Laufflächen (23),
einem zweiten Schienenelement (19) mit zwei zweiten Laufflächen (24), einem Wälzkörperkäfig (21) nach einem der vorhergehenden Ansprüche und einer Mehrzahl von Lagerwälzkörpern (16),
wobei jeweils mindestens einer aus der Mehrzahl von Lagerwälzkörpern (16) in einer aus der Mehrzahl von Durchbrechungen (5) des Wälzkörperkäfigs (21) aufgenommen ist,
wobei die Seitenfläche (6) der Durchbrechung (5) oder der Übergang zwischen einer der zwei Deckflächen (7, 8) und der Seitenfläche (6) in Kontakt mit einer Wälzkörperoberfläche (25) des in der Durchbrechung (5) aufgenommenen Lagerwälzkörpers (16) ist, und
wobei der Wälzkörperkäfig (21) die Mehrzahl von Lagerwälzkörpern (16) zwischen den ersten Laufflächen (23) des ersten Schienenelements (18) und den zweiten Laufflächen (24) des zweiten Schienenelements (19) positioniert, so dass das erste Schienenelement (18) und das zweite Schienenelement (19) derart aneinander gelagert sind, dass das erste Schienenelement (18) und das zweite Schienenelement (19) in und entgegen einer Auszugsrichtung (26) linear gegeneinander verschiebbar sind.

8. Lineares Führungssystem (17) nach dem vorhergehenden Anspruch,
wobei zumindest einer aus der Mehrzahl von Lagerwälzkörpern (16) eine Lagerkugel (16) ist,
wobei die Lagerkugel (16) eine Mehrzahl von Symmetrieebenen aufweist, wobei die Mehrzahl von Symmetrieebenen eine durch den Mittelpunkt der Lagerkugel (16) und senkrecht zu der Auszugsrichtung (26) verlaufende Gerade enthalten,
wobei entweder
die Fase (27) in zumindest einer aus der Mehrzahl von Symmetrieebenen gerade verläuft, konvex gekrümmt ist oder konkav gekrümmt ist oder
die Rundung (10) in zumindest einer aus der Mehrzahl von Symmetrieebenen konvex gekrümmt ist oder konkav gekrümmt ist.

9. Lineares Führungssystem (17) nach einem der vorhergehenden Ansprüche, wobei der Wälzkörperkäfig eine Dicke aufweist, die mindestens 5 % des Radius des Lagerwälzkörpers (16) beträgt und vorzugsweise mindestens 7,5 % des Radius des Lagerwälzkörpers (16) beträgt.

10. Lineares Führungssystem (17) nach einem der vorhergehenden Ansprüche, wobei der Wälzkörperkäfig (21) aus einem Material hergestellt ist, das eine geringere Härte aufweist als ein Material aus dem zumindest eine Mehrzahl der Lagerwälzkörper (16) hergestellt ist.

11. Lineares Führungssystem (17) nach einem der vorhergehenden Ansprüche, wobei das lineare Führungssystem (17) eine Mehrzahl von Lagerwälzkörpern (16) und eine Mehrzahl von Schmiermittelwälzkörpern aufweist, wobei die Schmiermittelwälzkörper ein Schmiermittel umfassen oder aus einem Schmiermittel bestehen und wobei die Lagerwälzkörper (16) aus einem Material hergestellt sind, das eine größere Härte aufweist als das Schmiermittel der Schmiermittelwälzkörper.

12. Verfahren zum Herstellen eines Wälzkörperkäfigs (21) nach einem der Ansprüche 1-6 für ein lineares Führungssystem (17) mit
Bereitstellen eines Materialabschnitts (1),
wobei der Materialabschnitt (1) zwei Aufnahmeabschnitte (2, 3) und einen die zwei Aufnahmeabschnitte (2, 3) verbindenden Verbindungsabschnitt (4) des Wälzkörperkäfigs (21) definiert,
wobei jeder der zwei Aufnahmeabschnitte (2, 3) zwei ausgedehnte Deckflächen (7, 8) aufweist,
wobei die zwei Aufnahmeabschnitte (2, 3) jeweils eine Mehrzahl von Durchbrechungen (5) aufweisen,
wobei jede Durchbrechung (5) eine die zwei Deckflächen (7, 8) verbindende Seitenfläche (6) aufweist und
wobei zwischen jeder der zwei Deckflächen (7, 8) und der Seitenfläche (6) jeweils ein Übergang ausgebildet ist,
**dadurch gekennzeichnet, dass** das Verfahren weiterhin den Schritt umfasst Bearbeiten des Übergangs zwischen einer der zwei Deckflächen (7, 8) und der Seitenfläche (6), so dass der Übergang zumindest abschnittsweise eine gebrochene Kante, eine Kante mit einer Fase (23) oder eine Rundung (10) aufweist.

13. Verfahren nach dem vorhergehenden Anspruch, wobei das Bearbeiten des Übergangs zumindest einen Schritt umfasst, der ausgewählt ist aus
Druckluftstrahlen des Materialabschnitts (1) mit einem festen Strahlmittel, Gleitschleifen des Materialabschnitts (1),
Prägen des Übergangs zwischen der Seitenwandfläche (6) und der Deckfläche (7) mit einem Umformwerkzeug (11, 12), so dass die Rundung (10) ausgebildet wird, wobei ein Verlauf der Rundung (10) durch eine Form des Umformwerkzeugs (11, 12) vorgegeben ist, und
spanabhebendes Bearbeiten des Übergangs zwischen der Seitenwandfläche (6) und der Deckfläche (7).

14. Verfahren nach Anspruch 12 oder 13, wobei das Bereitstellen des Materialabschnitts (1) die Schritte umfasst
Bereitstellen eines Streifens (1) aus einem Blech und
Ausschneiden oder Ausstanzen der Mehrzahl von Durchbrechungen (5).

15. Verfahren nach Anspruch 14 soweit von Anspruch 13 abhängig, wobei nach dem Ausschneiden oder Ausstanzen der Mehrzahl von Durchbrechungen (5) das Prägen des Übergangs zwischen der Seitenwandfläche (6) und der Deckfläche (7) mit einem Umformwerkzeug (11, 12) erfolgt und nach dem Prägen ein Abbiegen der Aufnahmeabschnitte (2, 3) gegenüber dem Verbindungsabschnitt (4) erfolgt.

## Claims

1. A rolling element cage (21) for a linear guide system (17) comprising
two receiving portions (2, 3) and a connecting portion (4) connecting the two receiving portions (2, 3),
wherein each of the two receiving portions (2, 3) comprises two extended top surfaces (7, 8),
wherein the two receiving portions (2, 3) each comprise a plurality of apertures (5),
wherein each aperture (5) comprises a side surface (6) connecting the two top surfaces (7, 8),
wherein at least one of a plurality of bearing rolling elements (16) is receivable in one of the plurality of apertures (5) of the rolling element cage (21), so that the side surface (6) of the aperture (5) or a transition between one of the two top surfaces (7, 8) and the side surface (6) can be brought into contact with a rolling element surface (25) of the bearing rolling element (16) receivable in the aperture (5),
**characterised in that**
the transition between one of the two top surfaces (7, 8) and the side surface (6) comprises, at least in sections, a broken edge, an edge comprising a chamfer (23) or a rounding (10).

2. The rolling element cage (21) according to the previous claim, wherein the rolling element cage (21) consists of a sheet metal.

3. The rolling element cage (21) according to the previous claim, wherein the rolling element cage (21) is obtainable by a method comprising air blasting the rolling element cage (21) with a solid blasting medium.

4. The rolling element cage (21) according to any one of the previous claims, wherein the rolling element cage (21) is obtainable by a method comprising vibratory grinding of the rolling element cage (21).

5. The rolling element cage (21) according to any one of the previous claims, wherein the rolling element cage (21) is obtainable by a method comprising embossing the transition between the side wall surface (6) and the top surface (7) with a forming tool (11, 12), so that the rounding (10) is formed, wherein a course of the rounding (10) is predetermined by a shape of the forming tool (11, 12), or by a chip removing method.

6. The rolling element cage (21) according to any one of the previous claims, wherein the rolling element cage (21) is manufactured from brass or bronze.

7. A linear guide system (17) comprising
a first rail element (18) comprising two first running surfaces (23),
a second rail element (19) comprising two second running surfaces (24),
a rolling element cage (21) according to any one of the previous claims, and a plurality of bearing rolling elements (16),
wherein at least one of the plurality of bearing rolling elements (16) is received in one of the plurality of apertures (5) of the rolling element cage (21),
wherein the side surface (6) of the aperture (5) or the transition between one of the two top surfaces (7, 8) and the side surface (6) is in contact with a rolling element surface (25) of the bearing rolling element (16) received in the aperture (5), and
wherein the rolling element cage (21) positions the plurality of bearing rolling elements (16) between the first running surfaces (23) of the first rail element (18) and the second running surfaces (24) of the second rail element (19), so that the first rail element (18) and the second rail element (19) are supported against each other in such a way that the first rail element (18) and the second rail element (19) are linearly displaceable relative to each other in and against a pull-out direction (26).

8. The linear guide system (17) according to any one of the previous claims,
wherein at least one of the plurality of bearing rolling elements (16) is a bearing ball (16),
wherein the bearing ball (16) comprises a plurality of planes of symmetry, wherein the plurality of planes of symmetry include a straight line extending through the centre of the bearing ball (16) and perpendicular to the pull-out direction (26),
wherein either
the chamfer (27) is straight, convexly curved or concavely curved in at least one of the plurality of planes of symmetry
or
the rounding (10) is convexly curved or concavely curved in at least one of the plurality of planes of symmetry.

9. The linear guide system (17) according to any one of the previous claims, wherein the rolling element cage comprises a thickness which is at least 5 % of the radius of the bearing rolling element (16) and preferably at least 7.5 % of the radius of the bearing rolling element (16).

10. The linear guide system (17) according to any one of the previous claims, wherein the rolling element cage (21) is manufactured from a material comprising a smaller hardness than a material from which at least a plurality of the bearing rolling elements (16) is manufactured.

11. The linear guide system (17) according to any one of the previous claims, wherein the linear guide system (17) comprises a plurality of bearing rolling elements (16) and a plurality of lubricant rolling elements, wherein the lubricant rolling elements comprise or consist of a lubricant and wherein the bearing rolling elements (16) are made of a material comprising a larger hardness than the lubricant of the lubricant rolling elements.

12. A method for manufacturing a rolling element cage (21) according to any one of claims 1-6 for a linear guide system (17) comprising
providing a material section (1),
wherein the material section (1) defines two receiving portions (2, 3) and a connecting portion (4) of the rolling element cage (21) connecting the two receiving portions (2, 3),
wherein each of the two receiving portions (2, 3) comprises two extended top surfaces (7, 8),
wherein the two receiving portions (2, 3) each comprise a plurality of apertures (5),
wherein each aperture (5) comprises a side surface (6) connecting the two top surfaces (7, 8), and
wherein a transition is formed between each of the two top surfaces (7, 8) and the side surface (6),
**characterised in that** the method further comprises the step of
machining the transition between one of the two top surfaces (7, 8) and the side surface (6) so that the transition comprises at least in sections a broken edge, an edge comprising a chamfer (23) or a rounding (10).

13. The method according to the previous claim, wherein the machining of the transition comprises at least one step selected from
air blasting the material section (1) comprising a solid blasting medium, vibratory grinding of the material section (1),
embossing the transition between the side wall surface (6) and the top surface (7) with a forming tool (11, 12) so that the rounding (10) is formed, wherein a course of the rounding (10) is predetermined by a shape of the forming tool (11, 12), and
machining the transition between the side wall surface (6) and the top surface (7).

14. The method according to claim 12 or 13, wherein providing the material section (1) comprises the steps of
providing a strip (1) from a metal sheet and
cutting or punching out the plurality of apertures (5).

15. The method according to claim 14 insofar as dependent on claim 13, wherein after cutting out or punching out the plurality of apertures (5), the transition between the side wall surface (6) and the top surface (7) is embossed with a forming tool (11, 12) and after embossing, the receiving portions (2, 3) are bent relative to the connecting portion (4).

## Revendications

1. Cage à corps roulants (21) pour un système de guidage linéaire (17) avec
deux tronçons de réception (2, 3) et un tronçon de liaison (4) reliant les deux tronçons de réception (2, 3),
chacun des deux tronçons de réception (2, 3) comprenant deux surfaces de recouvrement (7, 8) étendues,
les deux tronçons de réception (2, 3) comprenant chacun une pluralité de découpes (5),
chaque découpe (5) comprenant une surface latérale (6) reliant les deux surfaces de recouvrement (7, 8),
au moins un de la pluralité de corps roulants (16) pouvant être reçu dans une découpe respective de la pluralité de découpes (5) de la cage à corps roulants (21), si bien que la surface latérale (6) de la découpe (5) ou un passage entre une des deux surfaces de recouvrement (7, 8) et la surface latérale (6) puisse être mis en contact avec une surface de corps roulant (25) du corps roulant (16) pouvant être reçu dans la découpe (5),
**caractérisée en ce que**
le passage entre une des deux surfaces de recouvrement (7, 8) et la surface latérale (6) comprend, au moins par tronçon, un bord brisé, un bord avec un chanfrein (23) ou un arrondi (10).

2. Cage à corps roulants (21) selon la revendication précédente, la cage à corps roulants (21) étant constituée par une tôle.

3. Cage à corps roulants (21) selon la revendication précédente, la cage à corps roulants (21) pouvant être obtenue par un procédé qui comprend un grenaillage à air comprimé de la cage à corps roulants (21) avec un moyen de grenaillage solide.

4. Cage à corps roulants (21) selon l'une des revendications précédentes, la cage à corps roulants (21) pouvant être obtenue par un procédé qui comprend une tribofinition de la cage à corps roulants (21).

5. Cage à corps roulants (21) selon l'une des revendications précédentes, la cage à corps roulants (21) pouvant être obtenue par un procédé qui comprend un estampage du passage entre la surface de paroi latérale (6) et la surface de recouvrement (7) avec un outil d'estampage (11, 12) si bien que l'arrondi (10) soit formé, la forme de l'arrondi (10) étant donnée par une forme de l'outil d'estampage (11, 12), ou par un usinage par enlèvement de copaux.

6. Cage à corps roulants (21) selon l'une des revendications précédentes, la cage à corps roulants (21) étant fabriquée en laiton ou en bronze.

7. Système de guidage linéaire (17) avec
un premier élément de rail (18) avec deux premières surfaces de roulement (23), un deuxième élément de rail (19) avec deux deuxièmes surfaces de roulement (24),
une cage à corps roulants (21) selon l'une des revendications précédentes et une pluralité de corps roulants (16),
au moins un de la pluralité de corps roulants (16) étant reçu dans une découpe respective de la pluralité de découpes (5) de la cage à corps roulants (21),
la surface latérale (6) de la découpe (5) ou le passage entre une des deux surfaces de recouvrement (7, 8) et la surface latérale (6) étant en contact avec une surface de corps roulant (25) du corps roulant (16) reçu dans la découpe (5) et
la cage à corps roulants (21) positionnant la pluralité de corps roulants (16) entre les premières surfaces de roulement (23) du premier élément de rail (18) et les deuxièmes surfaces de roulement (24) du deuxième élément de rail (19), si bien que le premier élément de rail (18) et le deuxième élément de rail (19) soient disposés l'un contre l'autre de façon telle que le premier élément de rail (18) et le deuxième élément de rail (19) puissent être déplacés linéairement, l'un par rapport à l'autre, dans une direction d'extraction (16) ou dans le sens inverse.

8. Système de guidage linéaire (17) selon la revendication précédente,
au moins un de la pluralité de corps roulants (16) étant une bille de roulement (16),
la bille de roulement (16) comprenant une pluralité de plans de symétrie,
la pluralité de plans de symétrie comprenant une droite passant par le centre de la bille de roulement (16) et perpendiculairement à la direction d'extraction (26), ou bien
le chanfrein (27) passant droit dans au moins un de la pluralité de plans de symétrie, étant courbé de manière convexe ou étant courbé de manière concave
ou
l'arrondi (10) étant courbé de manière convexe ou étant courbé de manière concave dans au moins un de la pluralité de plans de symétrie.

9. Système de guidage linéaire (17) selon l'une des revendications précédentes, la cage à corps roulants ayant une épaisseur qui compte au moins 5% du rayon du corps roulant (16) et de préférence au moins 7,5% du rayon du corps roulant (16).

10. Système de guidage linéaire (17) selon l'une des revendications précédentes, la cage à corps roulants (21) étant fabriquée d'un matériau qui présente une dureté moindre qu'un matériau dont au moins une pluralité de corps roulants (16) est fabriquée.

11. Système de guidage linéaire (17) selon l'une des revendications précédentes, le système de guidage linéaire (17) comprenant une pluralité de corps roulants (16) et une pluralité de corps roulants lubrifiants, les corps roulants lubrifiants contenant un lubrifiant ou étant constitué d'un lubrifiant et les corps roulants (16) étant fabriqués d'un matériau qui présente une dureté plus grande que le lubrifiant des corps roulants lubrifiants.

12. Procédé de fabrication d'une cage à corps roulants (21) selon l'une des revendications 1 à 6 pour un système de guidage linéaire (17) avec
mise à disposition d'un tronçon de matériau (1),
le tronçon de matériau (1) définissant deux tronçons de réception (2, 3) et un tronçon de liaison (4) reliant les deux tronçons de réception (2, 3), chacun des deux tronçons de réception (2, 3) ayant deux surfaces de recouvrement étendues (7, 8),
les deux tronçons de réception (2, 3) comprenant chacun une pluralité de découpes (5),
chaque découpe (5) comprenant une surface latérale (6) reliant les deux surfaces de recouvrement (7, 8) et
entre chacune des deux surfaces de recouvrement (7, 8) et la surface latérale (6), un passage respectif étant formé,
**caractérisé en ce que** le procédé comprend de plus l'étape
d'usinage du passage entre une des deux surfaces de recouvrement (7, 8) et la surface latérale (6), si bien que le passage comprenne, du moins par tronçons, un bord brisé, un bord avec un chanfrein (23) ou un arrondi (10).

13. Procédé selon la revendication précédente, l'usinage du passage comprenant au moins une étape choisie parmi
grenaillage à air comprimé du tronçon de matériau (1) avec un moyen de grenaillage solide,
tribofinition du tronçon de matériau (1),
estampage du passage entre la surface de paroi latérale (6) et la surface de recouvrement (7) avec un outil d'estampage (11, 12) si bien que l'arrondi (10) soit formé, la forme de l'arrondi (10) étant donnée par une forme de l'outil d'estampage (11, 12), et
usinage du passage entre la surface de paroi latérale (6) et la surface de recouvrement (7) par enlèvement de copaux.

14. Procédé selon la revendication 12 ou 13, la mise à disposition du tronçon de matériau (1) comprenant les étapes
mise à disposition d'une bande (1) en une tôle et
découpage ou estampage de la pluralité de découpes (5).

15. Procédé selon la revendication 14 dépendante de la revendication 13, après le découpage ou l'estampage de la pluralité de découpes (5), l'estampage du passage entre la surface de paroi latérale (6) et la surface de recouvrement (7) s'effectuant à l'aide d'un outil de formage (11, 12), et après l'estampage, un pliage des tronçons de réception (2, 3) par rapport au tronçon de liaison (4) étant effectué.
